# EUROPÄISCHE PATENTSCHRIFT

(11) **EP 0 798 155 B1**
(45) Veröffentlichungstag und Bekanntmachung des Hinweises auf die Patenterteilung: **24.07.2002**
(21) Anmeldenummer: 97104129.8
(22) Anmeldetag: 12.03.1997
(51) Int. Cl.: B60N 2/32

(54) **Befestigungsvorrichtung**
Fastening device
Dispositif de fixation

(30) Priorität: 25.03.1996 DE 19611674
(43) Veröffentlichungstag der Anmeldung: 01.10.1997
(73) Patentinhaber: ADAM OPEL AG, 65423 Rüsselsheim (DE)
(72) Erfinder: Eggert, Olaf, Dipl.-Ing., 55278 Undenheim (DE); Friedrich, Christel, 55286 Wörrstadt (DE)

(56) Entgegenhaltungen:
- EP-A- 0 580 315
- US-A- 4 888 854
- US-A- 4 978 158
- US-A- 5 038 437
- PATENT ABSTRACTS OF JAPAN vol. 095, no. 009, 31. Oktober 1995 & JP 07 164941 A (IKEDA BUSSAN CO LTD), 27. Juni 1995

## Beschreibung

Die Erfindung betrifft eine Vorrichtung zur Befestigung eines schwenkbaren, an einem Karosserieblech eines Kraftfahrzeuges angeordneten Teils eines Rücksitzes, insbesondere einer Sitzschale, mit einem Scharnierteil und einem Bolzen.

Eine solche Befestigungsvorrichtung dient bei heutigen Kraftfahrzeugen insbesondere der Befestigung der Sitzschalen von Rücksitzen. Diese Sitzschalen sollen sich bei Bedarf um eine nahe ihrer vorderen Unterkante verlaufende Achse nach vorne schwenken lassen, bis das Sitzkissen gegen die Rückenlehne eines Vordersitzes gelangt. Hierfür ist an der Sitzschale und dem Karosserieblech jeweils ein Scharnierteil festgeschweißt. Die Scharnierteile weisen jeweils zwei Bohrungen auf, durch welche der Bolzen hindurchgeführt wird. Der Bolzen wird anschließend durch einen Federring gegen ein Herausfallen gesichert.

Aus der EP 0 580 315 A1 ist beispielsweise eine derartige Vorrichtung bekannt, die im vorderen Bereich des Rücksitzes angeordnet ist und im Wesentlichen aus einem mit der Sitzschale verbundenen Scharnierteil und einem mit dem Karosserieblech verbundenen Scharnierteil besteht, wobei diese Scharnierteile durch eine Gelenkachse miteinander drehbar verbunden sind.

Nachteilig bei den bekannten Befestigungsvorrichtungen ist, dass sich die Montage der Sitzschale sehr aufwendig gestaltet. Beispielsweise muss die Sitzschale gegenüber dem Karosserieblech sehr genau ausgerichtet werden, damit der Bolzen in die Bohrungen eingeführt werden kann. Da die Bolzen in der Regel sehr passgenau in den Bohrungen sitzen, erfolgt das Einführen der Bolzen mit einem hohen Kraftaufwand. Zum Einsetzen des Federringes ist zudem ein Werkzeug notwendig. Meist hat ein Kraftfahrzeug zwei hintere Sitzschalen mit jeweils zwei Paar Scharnierteilen, was den Montageaufwand zusätzlich erhöht. Ähnliche Schwierigkeiten können bei der Befestigung einer Rückenlehne eines Rücksitzes auftreten.

Der Erfindung liegt das Problem zugrunde, eine Befestigungsvorrichtung der eingangs genannten Art so zu gestalten, dass mit ihr ein Teil eines Rücksitzes, insbesondere eine Sitzschale, möglichst einfach auf dem Karosserieblech zu montieren ist.

Dieses Problem wird erfindungsgemäß dadurch gelöst, dass das Scharnierteil als eine den Bolzen um mehr als 180° umgreifende Federklammer und der Bolzen zum Eindrücken in den offenen Bereich der Federklammer ausgebildet ist und dass die Federklammer und der Bolzen jeweils am Karosserieblech oder an der Sitzschale angeordnet sind.

Durch diese Gestaltung wird zur Montage beispielsweise einer Sitzschale an dem Karosserieblech der Bolzen einfach auf den offenen Bereich der Federklammer gesetzt und in diese eingedrückt. Hierbei drückt der Bolzen die Federklammer auseinander und schnappt anschließend in diese ein. Danach ist der Bolzen von der Federklammer wie bei der bekannten Befestigungsvorrichtung schwenkbar gehalten. Die Sitzschale lässt sich anschließend einfach demontieren, indem sie mit dem Bolzen aus der Befestigungsvorrichtung herausgezogen wird. Für die Montage wie die Demontage ist bei der erfindungsgemäßen Befestigungsvorrichtung kein Werkzeug notwendig. Damit ermöglicht die erfindungsgemäße Befestigungsvorrichtung eine besonders einfache Montage von Teilen eines Rücksitzes. Diese Montage ist deshalb auch automatisierbar. Weiterhin besteht die erfindungsgemäße Befestigungsvorrichtung lediglich aus zwei Teilen gegenüber vier Teilen bei der bekannten Befestigungsvorrichtung. Hierdurch gestaltet sich die Befestigung der Sitzschale oder einer Rückenlehne besonders preiswert.

Die Befestigungsvorrichtung ist für eine Sitzschale konstruktiv besonders einfach ausgebildet, wenn die Federklammer an dem Karosserieblech und der Bolzen an der Sitzschale befestigt ist.

Die Öffnung der Federklammer sollte aus Gründen der Stabilität der erfindungsgemäßen Befestigungsvorrichtung nicht in eine der Richtungen zeigen, in denen die Sitzschale im Kraftfahrzeug durch Verzögerungen oder Beschleunigungen hauptsächlich belastet wird. Bei der an dem Karosserieblech befestigten Federklammer wird dies gemäß einer vorteilhaften Weiterbildung der Erfindung einfach dadurch erreicht, daß die Federklammer nach oben hin geöffnet ist. Diese Gestaltung erleichtert zudem die Montage der Sitzschale.

Der Bolzen ist gemäß einer anderen vorteilhaften Weiterbildung der Erfindung besonders einfach herstellbar und leicht zu montieren, wenn der Bolzen ein Teil eines an einem der Bauteile angeordneten Drahtbügels ist.

Bei Sitzschalen mit einem Grundblech oder dergleichen ist der Drahtbügel gemäß einer vorteilhaften Weiterbildung der Erfindung besonders einfach zu befestigen, wenn der Drahtbügel an der Sitzschale festgeschweißt ist.

Heutige Kraftfahrzeuge haben häufig Rücksitze, bei denen die Sitzschale aus Kunststoffschaum mit einem eingearbeiteten Drahtrahmen besteht. Dann besteht eine konstruktiv vorteilhafte Weiterbildung der Erfindung darin, daß der Drahtbügel ein Teil eines in der Sitzschale angeordneten Drahtrahmens ist. Durch diese Gestaltung ist der Drahtbügel kein separat zu montierendes Bauteil mehr.

Besonders stabil ist die erfindungsgemäße Befestigungsvorrichtung gestaltet, wenn das Karosserieblech die Federklammer in dem Bereich des Bolzens U-förmig umgreift. Hierdurch kann die Federklammer zur Vereinfachung der Montage der Sitzschale besonders schwach dimensioniert sein. Die Stabilität der Befestigung der Sitzschale wird durch den U-förmigen Bereich des Karosseriebleches gewährleistet.

Die Stabilität der erfindungsgemäßen Befestigungsvorrichtung wird weiter erhöht, wenn das Karosserieblech im Bereich der Federklammer ein Verstärkungsblech hat.

Bei einer von dem Karosserieblech getrennten Sitzschale hat die erfindungsgemäße Befestigungsvorrichtung keine scharfen Kanten, wenn das Karosserieblech oder das Verstärkungsblech gemäß einer anderen vorteilhaften Weiterbildung der Erfindung zunächst vor dem Bolzen geführt ist und ihn anschließend U-förmig umgreift. Weiterhin erhöht sich hierdurch die Sicherheit gegen ein Herausspringen der Sitzschale bei einem Crash.

Die Befestigungsvorrichtung läßt sich gemäß einer vorteilhaften Weiterbildung der Erfindung besonders einfach an dem Karosserieblech befestigen, wenn die Federklammer einen Rastvorsprung hat, welcher zum Hintergreifen einer Ausnehmung in dem Karosserieblech ausgebildet ist. Dieser Rastvorsprung sichert weiterhin die Federklammer gegen eine unbeabsichtigte Trennung von dem Verstärkungsblech.

Die Federklammer ist besonders sicher mit dem Karosserieblech oder dem Verstärkungsblech verbunden, wenn die Federklammer ein Ende des Verstärkungsblechs U-förmig umgreift und an beiden Schenkeln seines U-förmigen Bereichs jeweils einen Rastvorsprung zum Hintergreifen von Ausnehmungen in dem Karosserieblech oder dem Verstärkungsblech hat.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1:: eine Schnittdarstellung eines vorderen Bereichs einer an einem Karosserieblech befestigten Sitzschale mit angrenzenden Bauteilen,
- Fig. 2:: eine vergrößerte Darstellung einer Befestigungsvorrichtung aus Fig.1 mit angrenzenden Bauteilen,
- Fig. 3:: eine weitere Ausführungsform der erfindungsgemäßen Befestigungsvorrichtung.

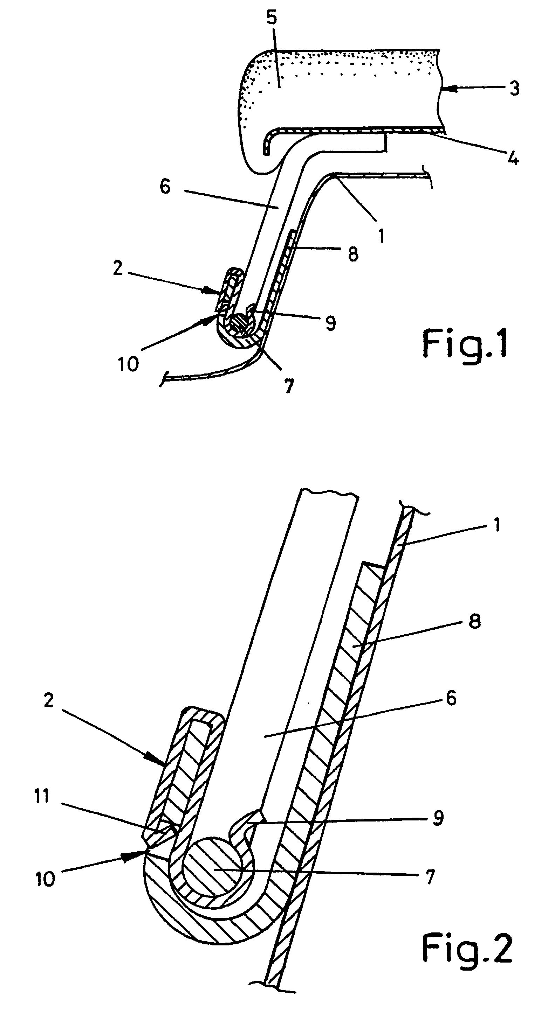

Die Figur 1 zeigt eine an einem Karosserieblech 1 eines Kraftfahrzeuges mittels einer Befestigungsvorrichtung 2 befestigte Sitzschale 3 eines Rücksitzes. Die Sitzschale 3 hat ein auf einem Grundblech 4 befestigtes Sitzkissen 5. An dem Grundblech 4 ist ein Drahtbügel 6 mit einem aus der Zeichenebene heraus verlaufenden Bolzen 7 angeschweißt. An dem Karosserieblech 1 ist ein den Bolzen 7 U-förmig umgreifendes Verstärkungsblech 8 angeschweißt. Dieses Verstärkungsblech 8 sorgt für die notwendige Stabilität der Befestigungsvorrichtung 2. In dem U-förmigen Bereich des Verstärkungsblechs 8 ist eine Federklammer 9 eingesetzt, die den Bolzen 7 um ungefähr 270° umgreift. Die Sitzschale 3 kann dadurch um den Bolzen 7 als Drehpunkt geschwenkt werden.

Zur Verdeutlichung ist die Befestigungsvorrichtung 2 vergrößert in Figur 2 dargestellt. Deutlich ist zu erkennen, daß das Verstärkungsblech 8 eine größere Blechstärke hat als das Karosserieblech 1. Weiterhin hat das Verstärkungsblech 8 eine Ausnehmung 10, in die ein Rastvorsprung 11 der Federklammer 9 eingreift.

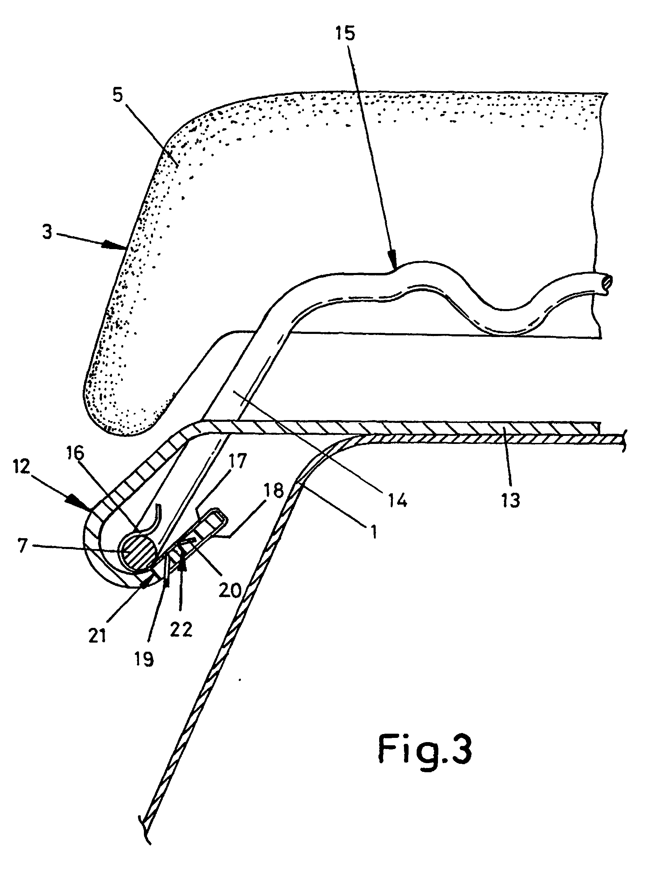

Die Figur 3 zeigt eine Befestigungsvorrichtung 12, bei der ein Verstärkungsblech 13 zunächst vor den Bolzen 7 geführt ist und diesen anschließend U-förmig umgreift. Das Verstärkungsblech 13 ist wie das in Figur 1 gezeigte Verstärkungsblech 8 an dem Karosserieblech 1 angeschweißt. Der Bolzen 7 wird von einem aus der Zeichenebenen heraus verlaufenden Teil eines Drahtbügels 14 gebildet. Der Drahtbügel 14 ist einteilig mit einem Drahtrahmen 15 gefertigt, welcher in dem Sitzkissen 5 angeordnet ist. Das Sitzkissen 5 besteht hier vorteilhafterweise aus Kunststoffschaum, von dem der Drahtrahmen 15 umschäumt ist. In dem U-förmigen Bereich des Verstärkungsbleches 13 ist eine U-förmige, ein Ende des Verstärkungsbleches 13 umgreifende Federklammer 16 angeordnet. Die Federklammer 16 hat an beiden Schenkeln 17, 18 seines U-förmigen Bereichs jeweils einen Rastvorsprung 19, 20. Diese Rastvorsprünge 19, 20 greifen in zwei Ausnehmungen 21, 22 des Verstärkungsbleches 13 ein. Hierdurch ist die Federklammer 16 formschlüssig mit dem Verstärkungsblech 13 verbunden. Wie bei der in Figur 1 gezeigten Befestigungsvorrichtung 2 umgreift die Federklammer 16 den Bolzen 7 um ungefähr 270°. Die Sitzschale 3 läßt sich entsprechend der in Figur 1 gezeigten Befestigungsvorrichtung 2 um den Bolzen 7 als Drehpunkt schwenken.

## Patentansprüche

1. Vorrichtung zur Befestigung eines schwenkbaren, an einem Karosserieblech (1) eines Kraftfahrzeuges angeordneten Teils eines Rücksitzes, insbesondere einer Sitzschale (3), mit einem Scharnierteil und einem Bolzen (7), **dadurch gekennzeichnet, dass** das Scharnierteil als eine den Bolzen (7) um mehr als 180° umgreifende Federklammer (9, 16) und der Bolzen (7) zum Eindrücken in den offenen Bereich der Federklammer (9, 16) ausgebildet ist und dass die Federklammer (9, 16) und der Bolzen (7) jeweils am Karosserieblech (1) oder an der Sitzschale (3) angeordnet sind.

2. Vorrichtung nach Anspruch 1, **dadurch gekennzeichnet, dass** die Federklammer (9, 16) an dem Karosserieblech (1) und der Bolzen (7) an der Sitzschale (3) befestigt ist.

3. Vorrichtung nach Anspruch 2, **dadurch gekennzeichnet, dass** die Federklammer (9, 16) nach oben hin geöffnet ist.

4. Vorrichtung nach zumindest einem der vorhergehenden Ansprüche, **dadurch gekennzeichnet, dass** der Bolzen (7) ein Teil eines am Karosserieblech (1) oder an der Sitzschale (3) angeordneten Drahtbügels (6, 14) ist.

5. Vorrichtung nach Anspruch 4, **dadurch gekennzeichnet, dass** der Drahtbügel (6) an der Sitzschale (3) festgeschweißt ist.

6. Vorrichtung nach Anspruch 4, **dadurch gekennzeichnet, dass** der Drahtbügel (14) ein Teil eines in der Sitzschale (3) angeordneten Drahtrahmens (15) ist.

7. Vorrichtung nach zumindest einem der vorhergehenden Ansprüche, **dadurch gekennzeichnet, dass** das Karosserieblech (1) die Federklammer (9, 16) in dem Bereich des Bolzens (7) U-förmig umgreift.

8. Vorrichtung nach zumindest einem der vorhergehenden Ansprüche, **dadurch gekennzeichnet, dass** das Karosserieblech (1) im Bereich der Federklammer (9, 16) ein Verstärkungsblech (8, 13) hat.

9. Vorrichtung nach zumindest einem der vorhergehenden Ansprüche, **dadurch gekennzeichnet, dass** das Karosserieblech (1) oder das Verstärkungsblech (8, 13) zunächst vor dem Bolzen (7) geführt ist und ihn anschließend U-förmig umgreift.

10. Vorrichtung nach zumindest einem der vorhergehenden Ansprüche, **dadurch gekennzeichnet, dass** die Federklammer (9) einen Rastvorsprung (11) hat, welcher zum Hintergreifen einer Ausnehmung (10) in dem Karosserieblech (1) oder dem Verstärkungsblech (8) ausgebildet ist.

11. Vorrichtung nach zumindest einem der vorhergehenden Ansprüche, **dadurch gekennzeichnet, dass** die Federklammer (16) ein Ende des Verstärkungsbleches (13) U-förmig umgreift und an beiden Schenkeln seines U-förmigen Bereichs jeweils einen Rastvorsprung (19, 20) zum Hintergreifen von Ausnehmungen (21, 22) in dem Karosserieblech (1) oder dem Verstärkungsblech (13) hat.

## Claims

1. Device for fixing a pivotable portion of a rear seat arranged on a body panel (1) of a motor vehicle, in particular a seat shell (3), with a hinge portion and a bolt (7), **characterised in that** the hinge portion is designed as a spring clip (9, 16) encompassing the bolt (7) by more than 180° and the bolt (7) is designed to be pressed into the open region of the spring clip (9, 16) and **in that** the spring clip (9, 16) and the bolt (7) are in each case arranged on the body panel (1) or on the seat shell (3).

2. Device according to claim 1, **characterised in that** the spring clip (9, 16) is attached to the body panel (1) and the bolt (7) is attached to the seat shell (3).

3. Device according to claim 2, **characterised in that** the spring clip (9, 16) opens upwardly.

4. Device according to one or more of the preceding claims, **characterised in that** the bolt (7) is part of a wire strap (6, 14) arranged on the body panel (1) or on the seat shell (3).

5. Device according to claim 4, **characterised in that** the wire strap (6) is welded fast to the seat shell (3).

6. Device according to claim 4, **characterised in that** the wire strap (14) is part of a wire frame (15) arranged in the seat shell (3).

7. Device according to one or more of the preceding claims, **characterised in that** the body panel (1) encompasses the spring clip (9, 16) in a U shape in the region of the bolt (7).

8. Device according to one or more of the preceding claims, **characterised in that** the body panel (1) in the region of the spring clip (9, 16) has a reinforcing plate (8, 13).

9. Device according to one or more of the preceding claims, **characterised in that** the body panel (1) or the reinforcing plate (8, 13) is first passed in front of the bolt (7) and then encompasses it in a U shape.

10. Device according to one or more of the preceding claims, **characterised in that** the spring clip (9) has a latch projection (11) which is designed to engage behind a recess (10) in the body panel (1) or reinforcing plate (8).

11. Device according to one or more of the preceding claims, **characterised in that** the spring clip (16) encompasses one end of the reinforcing plate (13) in a U shape and has on each of both arms of its U-shaped region a latch projection (19, 20) for engaging behind recesses (21, 22) in the body panel (1) or reinforcing plate (13).

## Revendications

1. Dispositif pour la fixation d'une partie d'un siège arrière, en particulier d'une coque de siège (3), montée pivotante sur une tôle de carrosserie (1) d'un véhicule automobile, comprenant une partie charnière et un axe (7), **caractérisé en ce que** la partie charnière est conformée en attache élastique (9, 16), qui entoure l'axe sur plus de 180°, et l'axe (7) est conformé pour être inséré dans la partie ouverte de l'attache élastique (9, 16) et **en ce que** l'attache élastique (9, 16) et l'axe (7) sont disposés respectivement sur la tôle de carrosserie (1) ou sur la coque de siège (3).

2. Dispositif selon la revendication 1, **caractérisé en ce que** l'attache élastique (9, 16) est fixée à la tôle de carrosserie (1) et l'axe à la coque de siège (3).

3. Dispositif selon la revendication 2, **caractérisé en ce que** l'attache élastique (9, 16) est ouverte vers le haut.

4. Dispositif selon au moinerie des revendications précédentes, **caractérisé en ce que** l'axe (7) est une partie d'un arceau (6, 14) en fil d'acier disposé sur la tôle de carrosserie (1) ou sur la coque de siège (3).

5. Dispositif selon la revendication 4, **caractérisé en ce que** l'arceau (6) en fil d'acier est soudé à la coque de siège (3).

6. Dispositif selon la revendication 4, **caractérisé en ce que** l'arceau (14) en fil d'acier est une partie d'un châssis (15) en fil d'acier disposé à l'intérieur de la coque de siège (3).

7. Dispositif selon au moins une des revendications précédentes, **caractérisé en ce que** la tôle de carrosserie (1) entoure en formant un U l'attache élastique (9, 16) dans la région de l'axe (7).

8. Dispositif selon au moins une des revendications précédentes, **caractérisé en ce que** la tôle de carrosserie (1) comporte une tôle de renfort (8, 13) dans la région de l'attache élastique (9, 16).

9. Dispositif selon au moins une des revendications précédentes, **caractérisé en ce que** la tôle de carrosserie (1) ou la tôle de renfort (8, 13) passe d'abord devant l'axe (7) et entoure ensuite celui-ci en formant un U.

10. Dispositif selon au moins une des revendications précédentes, **caractérisé en ce que** l'attache élastique (9) comporte une saillie d'encliquetage (11), qui est conformée pour s'engager dans une échancrure (10) dans la tôle de carrosserie (1) ou dans la tôle de renfort (8).

11. Dispositif selon au moins une des revendications précédentes, **caractérisé en ce que** l'attache élastique (16) entoure en formant un U une extrémité de la tôle de renfort (13) et, aux deux extrémités de sa partie en forme de U, porte une saillie d'encliquetage (19, 20) destinée à s'encliqueter dans des échancrures (21, 22) dans la tôle de carrosserie (1) ou dans la tôle de renfort (8).
